# DEMANDE DE BREVET EUROPEEN

(11) **EP 0 990 541 A1**
(43) Date de publication de la demande: **05.04.2000**
(21) Numéro de dépôt: 99118968.9
(22) Date de dépôt: 27.09.1999
(51) Int. Cl.: B60H 1/00

(54) **Dispositif à volets pour entrée d'air d'un véhicule automobile**

(30) Priorité: 29.09.1998 FR 9812142
(71) Demandeur: VALEO CLIMATISATION, 78321 La Verrière (FR)
(72) Inventeur: Queinnec, Jean-Yves, 78990 Elancourt (FR)

(57) **Abrégé**

L'invention se rapporte à un dispositif à volets pour entrée d'air d'un véhicule automobile, du type comprenant un volet principal (10) pivotant autour d'un axe de rotation (17) de manière à obturer sélectivement une entrée d'air recirculé (2) et une entrée d'air extérieur (1), et un volet d'ajustement de pression (20), pivotant de manière à agir sur la pression dynamique de l'air de l'entrée d'air extérieur (1) lorsque le volet principal (10) obture l'entrée d'air recirculé (2). Il est caractérisé en ce que le volet d'ajustement de pression (20) présente un axe de rotation (27) qui est porté par le volet principal (10) et qui est espacé de l'axe de rotation (17) du volet principal (10).

## Description

La présente invention a pour objet un dispositif à volets pour entrée d'air d'un véhicule automobile.

On connaît de la Demande de Brevet Européen n° 0 678 410 une entrée d'air pour véhicule automobile, qui compote un volet principal, de type tambour, qui obture sélectivement une entrée d'air extérieur ou bien une entrée d'air recirculé, ainsi qu'un volet d'ajustement de pression dont la fonction est la gestion de la pression dynamique de l'air extérieur.

Le volet d'ajustement de pression est coaxial au volet principal et est également du type tambour.

Le pivotement des deux volets est commandé par un dispositif d'entraînement unique coopérant avec des leviers de commande pour réaliser une commande par cames du déplacement des volets. Selon une variante, les deux volets peuvent être commandés séparément.

Le déplacement contrôlé du volet d'ajustement de pression permet de maintenir sensiblement constante la pression dynamique à l'entrée d'air extérieur, quelle que soit la vitesse de l'air à l'entrée d'air extérieur, cette vitesse étant fonction de la vitesse du véhicule ainsi que de la vitesse du vent.

La disposition coaxiale des deux volets du type tambour a pour conséquence que le dispositif occupe beaucoup d'espace, alors même que les règles de conception des véhicules tendent à économiser l'espace.

Un autre inconvénient du dispositif décrit dans le Brevet précité est que, lorsque le volet principal est actionné pour obturer l'entrée d'air recirculé, le volet de gestion de la pression dynamique obture partiellement l'entrée d'air extérieur. Symétriquement, lorsque le volet principal est actionné pour obturer l'entrée d'air extérieur, le volet de gestion de la pression dynamique se trouve en général dans une position instantanée où il obture partiellement l'entrée d'air recirculé. Il en résulte que, dans chaque cas, il faut effacer entièrement le volet de gestion de la pression dynamique à l'intérieur du volet principal pour obtenir la pleine ouverture d'une entrée d'air.

Dans le cas où les deux volets sont commandés par un mécanisme unique, le dispositif d'entraînement doit assurer une précision suffisante de la position du volet d'ajustement de pression. Un tel dispositif, par exemple un motoréducteur pas à pas, ne permet pas une vitesse élevée de pivotement des volets.

Dans le cas où les deux volets sont commandés séparément, le volet d'ajustement de pression ne peut être commandé que par un mécanisme relativement lent, par exemple un motoréducteur pas à pas, ce qui fait que l'effacement précité du volet d'ajustement de pression à l'intérieur du volet principal ne peut être obtenu avec une vitesse élevée.

Dans l'un ou l'autre cas, le temps de pleine ouverture de l'une ou l'autre entrée d'air n'est donc pas optimal.

Un but de l'invention est la mise en oeuvre d'un dispositif à volets qui permette un gain d'espace par rapport au dispositif décrit dans la Demande de Brevet EP 0 678 410 précitée.

Un autre but de l'invention est la mise en oeuvre d'un dispositif dans lequel le déplacement du volet principal produit un déplacement du volet d'ajustement de pression.

Un autre but de l'invention est la mise en oeuvre d'un dispositif présentant un temps de réaction plus court que le dispositif de l'art antérieur précité.

Un autre but de l'invention est de permettre, en actionnant seulement le volet principal, une refermeture rapide de l'entrée d'air recirculé ou de l'entrée d'air extérieur, qui s'accompagne d'une pleine ouverture respectivement de l'entrée d'air extérieur ou de l'entrée d'air recirculé.

Au moins un but de l'invention est atteint par un dispositif à volets pour entrée d'air d'un véhicule automobile, du type comprenant un volet principal pivotant autour d'un axe de rotation de manière à obturer sélectivement une entrée d'air recirculé et une entrée d'air extérieur, et un volet d'ajustement de pression, pivotant de manière à agir sur la pression dynamique de l'air de l'entrée d'air extérieur lorsque le volet principal obture l'entrée d'air recirculé, caractérisé en ce que le volet d'ajustement de pression présente un axe de rotation qui est porté par le volet principal et qui est espacé de l'axe de rotation du volet principal.

Le volet principal est avantageusement du type drapeau.

Le volet d'ajustement de pression est avantageusement du type tambour.

Le dispositif présente avantageusement un dispositif d'entraînement du volet principal qui est porté par le volet principal ou par une paroi de l'entrée d'air.

Le dispositif présente avantageusement un dispositif d'entraînement du volet d'ajustement de pression, qui est porté par le volet principal, ou par le volet d'ajustement de pression.

Une commande séparée des deux volets permet à la fois d'augmenter la précision sur la position du volet de gestion dynamique et la vitesse de fermeture totale de l'entrée d'air extérieur.

Le dispositif peut être caractérisé en ce que, lorsque le volet principal obture l'entrée d'air principal, le volet d'ajustement de pression est en amont du volet principal par rapport à la direction de l'air extérieur lorsqu'il alimente l'entrée d'air extérieur.

Ceci permet que, quelle que soit la position du volet d'ajustement de pression, celui-ci ne peut obturer même partiellement l'entrée d'air recirculé, lorsque le volet principal obture l'entrée d'air extérieur.

L'invention sera mieux comprise à la lecture de la description qui va suivre, donnée à titre d'exemple non limitatif, en liaison avec les dessins ci-annexés, dans lesquels :
- la Figure 1 représente un mode de réalisation préféré du dispositif selon l'invention, dans une première position dans laquelle le volet principal obture l'entrée d'air recirculé et dans laquelle le volet d'ajustement de pression est en position réfractée ;
- la Figure 2 représente le dispositif de la Figure 1 dans une deuxième position qui diffère de la première position par le fait que le volet d'ajustement de pression est en position déployée ;
- la Figure 3 représente le dispositif de la Figure 1 dans une troisième position dans laquelle le volet principal obture l'entrée d'air extérieur et dans laquelle le volet d'ajustement de pression est en position rétractée ; et
- la Figure 4 représente le dispositif de la Figure 1 dans une quatrième position dans laquelle le volet principal obture l'entrée d'air extérieur et dans laquelle le volet d'ajustement de pression est en position déployée.

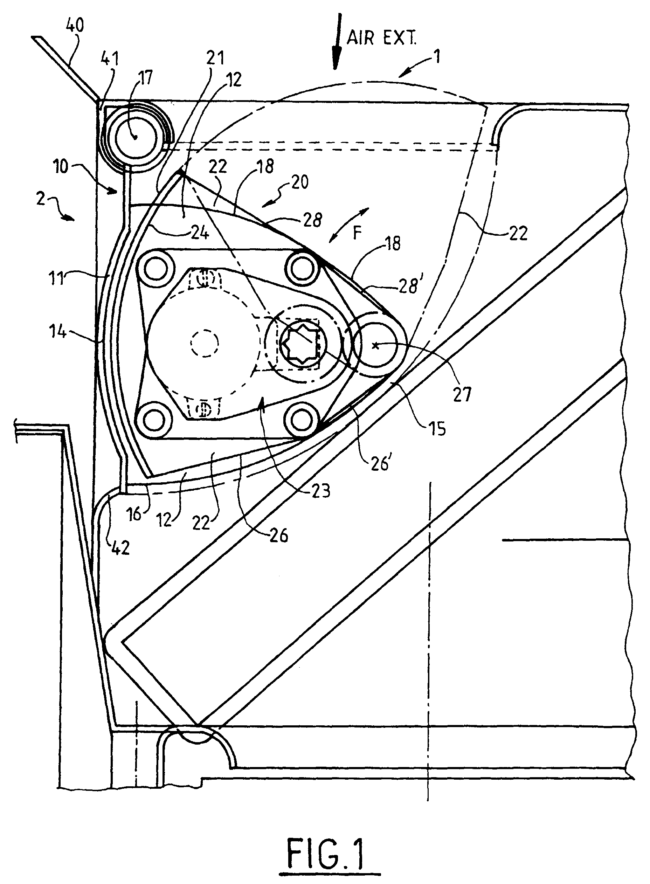

Comme représenté à la Figure 1, le dispositif à volets comporte un volet principal 10, ici du type drapeau, qui est mobile en rotation autour d'un axe de rotation 17 qui est logé dans une paroi 41 d'un boîtier d'entrée d'air, au voisinage d'une paroi 40 de séparation entre une entrée d'air extérieur 1 et une entrée d'air recirculé 2.

Le volet principal 10 présente une surface d'obturation 11 dont un bord se prolonge par une joue 12 qui est ici plane et située dans un plan perpendiculaire à l'axe 17, et dont le contour forme un triangle curviligne (14, 16, 18). Le bord 14 correspond à la concavité de la surface d'obturation 11, qui est dirigée vers la joue 12, c'est-à-dire vers l'aval de l'entrée d'air recirculé 2, dans la position représentée à la Figure 1.

L'entraînement en rotation du volet 10 est assuré par des moyens classiques, soit purement mécaniques, ou à l'aide d'un actionneur tel qu'un vérin pneumatique, un motoréducteur rapide à courant continu à deux positions, ou pas à pas.

La joue 12 porte, au voisinage du sommet 15 du triangle curviligne (14, 16, 18), un axe de rotation 27 d'un volet 20 d'ajustement de pression qui est ici du type tambour. Il comporte une surface curviligne d'obturation 21 qui, dans la position repliée représentée à la Figure 1, longe la surface curviligne d'obturation 11, et une joue 22 plane et parallèle à la joue 12, et qui présente un contour qui a l'allure générale d'un triangle curviligne, mais qui présente un côté curviligne 24 en arc de cercle et deux paires de côtés droits, respectivement 26, 26' et 28, 28'.

Dans l'exemple représenté, la joue 22 porte un mécanisme d'entraînement 23, qui assure un déplacement relatif entre les deux volets 10 et 20, en particulier un motoréducteur par exemple de type pas à pas ou à courant continu, qui permet au volet 20 de tourner autour de l'axe 27 parallèle à l'axe 17, pour assurer sa fonction de gestion de la pression dynamique de l'air extérieur, au niveau de l'entrée d'air extérieur 1.

Alternativement, le mécanisme d'entraînement 23 peut être monté sur le volet 10.

Dans la Position I représentée à la Figure 1, le volet 10 est en butée sur le bord 42 de l'entrée d'air recirculé 2. Le volet 10 présente préférentiellement des moyens d'étanchéité. classiques, non représentés.

Le déplacement angulaire du volet 20, qui est induit par le mécanisme d'entraînement 23, permet à la surface active d'obturation 21 de masquer plus ou moins l'entrée d'air extérieur 1 pour gérer la pression dynamique due notamment à la vitesse du véhicule.

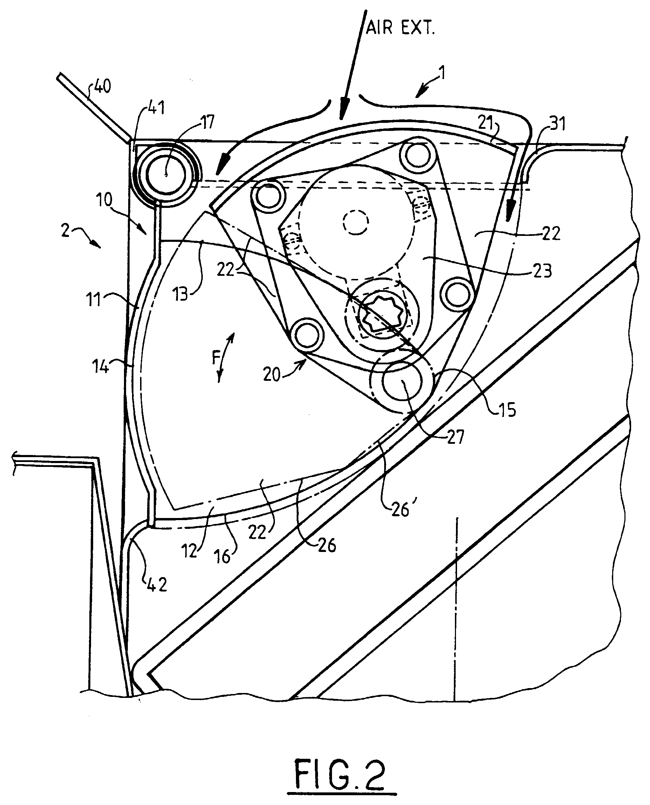

Dans la Position II (Figure 2), le volet 20 est dans sa position de déploiement maximal, et d'obturation maximale de l'entrée d'air extérieur 1, le volet 10 obturant toujours l'entrée d'air recirculé 2. On voit en particulier que l'air extérieur longe le profil curviligne 21 et passe d'une part entre un bord de celui-ci et un bord 31 du boîtier d'entrée d'air, et d'autre part entre le bord opposé du profil 21 et l'axe 17.

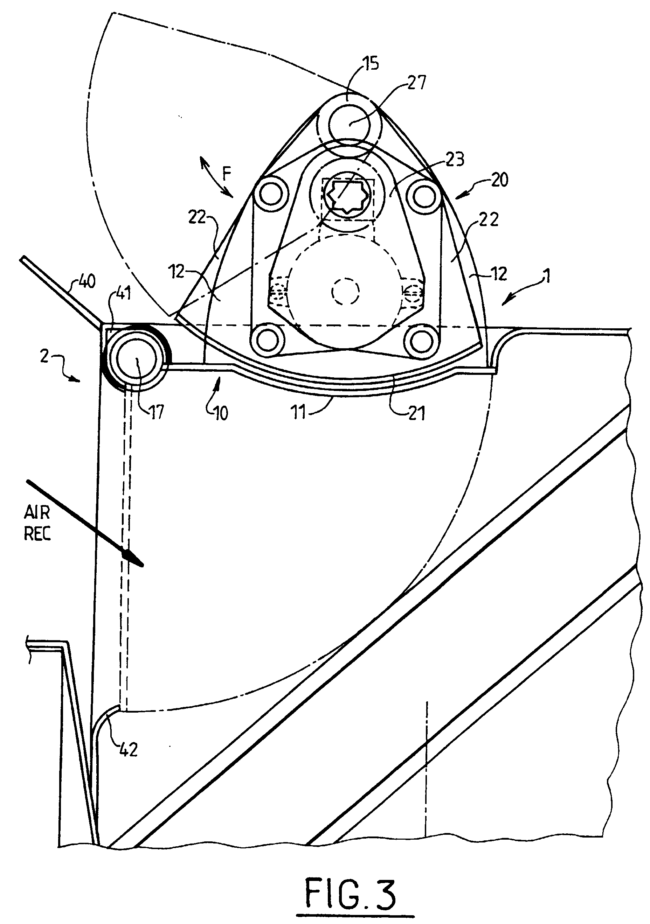

Dans la position III (Figure 3), le volet principal 10 obture l'entrée d'air extérieur 1. Le volet 12 est en sa position repliée.

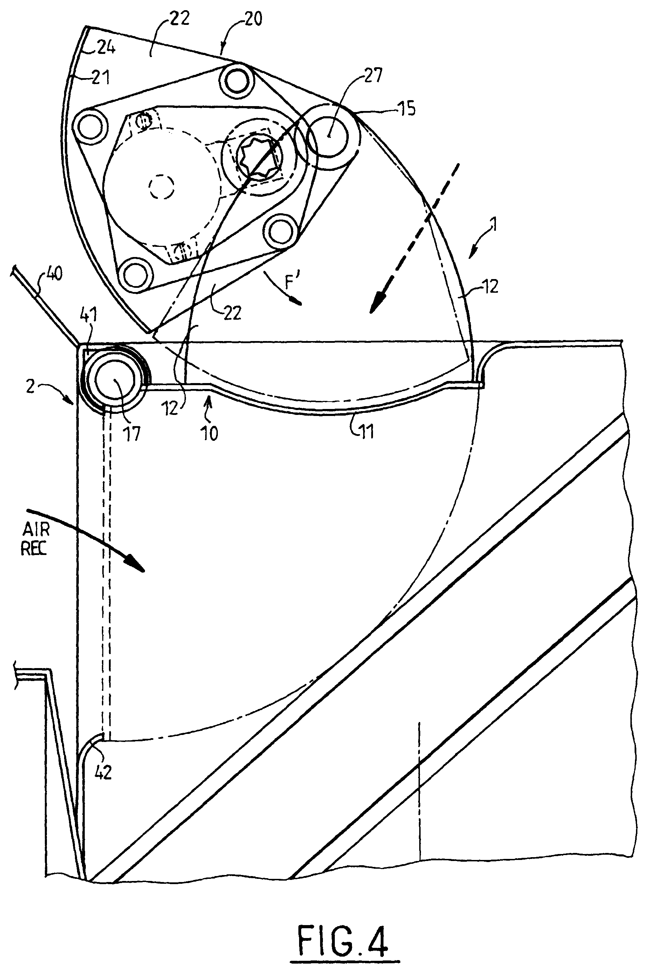

Dans la position IV (Figure 4), le volet principal obture l'entrée d'air extérieur 1. Le volet 12 est en position déployée, comme à la Figure 2.

On voit qu'en raison de la mise en oeuvre de deux axes de rotation 17 et 27 distincts, le volet 20 est situé en amont du volet 10 par rapport à la direction de l'air extérieur lorsqu'il alimente l'entrée d'air 1. Dans ces conditions, et quelle que soit la position du volet 20, l'entrée d'air recirculé 2 est entièrement dégagée lorsque le volet 10 obture l'entrée d'air extérieur 1.

La mise en oeuvre préférentielle de deux actionneurs permet de concilier une bonne précision de la position du volet 20, grâce par exemple à la mise en oeuvre d'un motoréducteur pas à pas, et une rapidité de fermeture totale de l'entrée d'air extérieur 1 en cas de besoin. Le volet 10 peut en effet être entraîné par un actionneur tel qu'un vérin, un motoréducteur à courant continu, ou par un dispositif mécanique, qui est plus rapide qu'un motoréducteur pas à pas qui commanderait l'ensemble des deux volets 10 et 20 par l'intermédiaire d'une cinématique commune complexe, ainsi que le décrit le Brevet Européen 0 678 410 précité.

Même si on considère la variante envisagée dans le Brevet précité, selon laquelle les deux volets pourraient être commandés indépendamment, la solution selon l'invention reste avantageuse en terme de rapidité, car, dans le mécanisme de l'art antérieur, il faut en cas de fermeture rapide de l'une des entrées d'air, que le volet de gestion de pression dynamique revienne en sa position rétractée pour qu'il dégage entièrement l'autre entrée d'air.

Dans le dispositif selon l'invention, le volet 20 peut revenir en position rétractée en temps masqué entre la position IV et la position III.

En ce qui concerne le fonctionnement :
- La Position I assure une ouverture maximale de la section d'entrée d'air extérieur 1, alors que la Position II assure une ouverture minimale, le volet 20 étant en position d'obturation maximale. Toutes les positions intermédiaires entre la Position I et la Position II sont possible, ce qui permet de moduler la section de l'entrée d'air extérieur 1 et d'assurer la fonction recherchée de gestion de la pression dynamique.
- La Position III correspond à la position "recyclage". Le volet 20 est normalement en position rétractée par rapport au volet 10.
- La Position IV correspond à la position "recyclage" après un actionnement du volet 10 alors que le volet 20 était en position déployée. L'actionneur du volet 20 ramène progressivement celui-ci à la position III dans le sens de la flèche F'. Ceci se fait en temps masqué, c'est-à-dire avant que le volet 10 ne soit de nouveau actionné. En raison du fait que le volet 20 est entraîné par un dispositif positionneur tel qu'un motoréducteur pas à pas, son mouvement est plus lent que celui du volet 10.

Il est même possible de pré-positionner le volet 20 de sorte que, lorsque le volet 10 est de nouveau actionné pour obturer l'entrée d'air 2, l'entrée d'air extérieur 1 soit obturée de manière désirée en fonction de la vitesse du véhicule.

En particulier, lors du mouvement du volet principal 10 entre la position obturant l'air recirculé et la position obturant l'entrée d'air extérieur 1, ou lors du mouvement inverse, le volet d'ajustement de pression 20 peut être commandé pour avoir un mouvement simultané ou non entre deux positions quelconques données par rapport au vole principal 10.

Des séquences de fonctionnement typiquement utilisées en pratique sont :
- à petite vitesse (pas de gestion de la pression dynamique) : successivement Position I et Position III ;
- à vitesse élevée (avec gestion maximale de la pression dynamique) : successivement Position I - Position II - Position IV - Position III.

Bien entendu, les volets 10 et 20 peuvent être d'un autre type que celui qui a été mentionné à titre d'exemple.

L'invention concerne également une installation de chauffage-ventilation et/ou climatisation qui présente un dispositif à volets tel que défini ci-dessus.

## Revendications

1. Dispositif à volets pour entrée d'air d'un véhicule automobile, du type comprenant un volet principal pivotant autour d'un axe de rotation de manière à obturer sélectivement une entrée d'air recirculé et une entrée d'air extérieur, et un volet d'ajustement de pression, pivotant de manière à agir sur la pression dynamique de l'air de l'entrée d'air extérieur lorsque le volet principal obture l'entrée d'air recirculé, caractérisé en ce que le volet d'ajustement de pression (20) présente un axe de rotation (27) qui est porté par le volet principal (10) et qui est espacé de l'axe de rotation (17) du volet principal (10).

2. Dispositif selon la revendication 1, caractérisé en ce que le volet principal (10) est du type drapeau.

3. Dispositif selon la revendication 1 ou la revendication 2, caractérisé en ce que le volet d'ajustement de pression (20) est du type tambour.

4. Dispositif selon l'une des revendications 1 à 3, caractérisé en ce qu'il présente un dispositif d'entraînement du volet principal (10) qui est porté par le volet principal (10) ou par une paroi de l'entrée d'air.

5. Dispositif selon la revendication 4, caractérisé en ce que le dispositif d'entraînement du volet principal (10) est un actionneur tel qu'un vérin, un motoréducteur à courant continu ou pas à pas ou un dispositif mécanique.

6. Dispositif selon l'une quelconque des revendications précédentes, caractérisé en ce qu'il présente un dispositif d'entraînement (23) du volet d'ajustement de pression (20), qui est porté par le volet principal (10), ou par le volet d'ajustement de pression (20).

7. Dispositif selon la revendication 6, caractérisé en ce que le dispositif d'entraînement (23) du volet d'ajustement de pression est un dispositif positionneur tel qu'un motoréducteur pas à pas ou à courant continu.

8. Dispositif selon l'une quelconque des revendications précédentes, caractérisé en ce que le volet (20) d'ajustement de pression est mobile entre une position rétractée et une position déployée qui correspondent respectivement à une ouverture maximale et une obturation maximale de rentrée d'air extérieur lorsque le volet principal (10) obture l'entrée d'air recirculé (2).

9. Dispositif selon la revendication 8, caractérisé en ce que, dans ladite position rétractée, une surface d'obturation (24) du volet d'ajustement de pression (20) longe une surface d'obturation (11) du volet principal (10).

10. Dispositif selon l'une quelconque des revendications précédentes, caractérisé en ce que, lorsque le volet principal (10) obture l'entrée d'air principal (1), le volet d'ajustement de pression (20) est en amont du volet principal (10) par rapport à la direction de l'air extérieur lorsqu'il alimente l'entrée d'air extérieur (1).

11. Dispositif selon l'une quelconque des revendications précédentes, caractérisé en ce qu'il comporte un moyen permettant, lors du mouvement du volet principal (10) entre la position obturant l'entrée d'air recirculé (2) et la position obturant l'entrée d'air extérieur (1), ou lors du mouvement inverse, de déplacer, de manière simultanée ou non, le volet d'ajustement de pression (20) entre deux positions données par rapport au volet principal (10).

12. Installation de chauffage-ventilation et/ou climatisation, caractérisée en ce qu'elle comporte un dispositif selon une des revendications précédentes.
